# EUROPEAN PATENT APPLICATION

(11) **EP 1 772 190 A1**
(43) Date of publication of application: **11.04.2007**
(21) Application number: 05728021.6
(22) Date of filing: 31.03.2005
(51) Int. Cl.: B01J 37/02, B01J 23/42, H01M 4/88

(54) **METHOD FOR PRODUCING CATALYST**

(30) Priority: 11.06.2004 JP 2004174229
(71) Applicant: Japan Advanced Institute of Science and Technology, Ishikawa 923-1292 (JP)
(72) Inventor: MITANI, Tadaoki, Ishikawa 923-1211 (JP); KIM, Yongtae c/o Massachusetts Inst. of Technlogy, Cambridge, MA 02139 (US)
(74) Representative: Vossius & Partner
(86) International application number: PCT/JP2005/006344
(87) International publication number: WO 2005/120708

(57) **Abstract**

A method for producing a catalyst, comprising the step of supporting a metal atom on a support in which a thiol group is introduced on its surface. The catalyst is useful for a catalytic electrode of fuel cells, a composite electrode of capacitors or secondary batteries, a catalyst for an organic synthesis, a catalyst for an environmental cleanup, or the like.

## Description

### TECHNICAL FIELD

The present invention relates to a method for producing a catalyst. More specifically, the present invention relates to a method for producing a catalyst useful for a catalytic electrode of fuel cells, a composite electrode of capacitors or secondary batteries, a catalyst for an organic synthesis, a catalyst for an environmental cleanup, or the like.

### BACKGROUND ART

A catalytic reaction is a reaction that mainly takes place on the surface of a catalyst, and a catalytic activity is determined by a surface area of the catalyst. Therefore, it is necessary that a catalyst is highly dispersed using a support.

Methods for dispersing a catalyst in a highly dispersed state are roughly classified into two methods: a method of improving a method for producing catalytic particles (see, for example, Patent Publication 1), and a method of modifying the surface of a support (see, for example, Patent Publication 2). As the method of improving a method for producing catalytic particles mentioned above, a chemical method or a physical method for providing a highly dispersed fine metal particles, or the like has been reported. In addition, as the method of modifying the surface of a support mentioned above, a method of increasing the surface area by an oxidation treatment, a method for producing a carbon support having a new structure, or the like has been known.

However, to date, although catalysts are tried to be dispersed into a highly dispersed state on a support surface by numerous methods, a catalyst having the desired dispersing properties has not yet been developed. The reason therefor is that the aggregation of the fine metal particles takes place on the support.

Therefore, in order to inhibit the aggregation, the use of a protective material upon the production of fine metal particles has been proposed. However, this protective material acts as a catalyst-inhibitory factor in the catalytic reaction, so that there is a disadvantage that the function as a catalyst is not sufficient even while having excellent dispersion properties.

On the other hand, when a support having a large surface area is used, while excellent dispersion properties can be obtained, there is a disadvantage that the fine metal particles are supported in the pores, so that the function as a catalyst is lowered.
Patent Publication 1: Japanese Patent Laid-Open No. 2003-147642
Patent Publication 2: Japanese Patent Laid-Open No. 2003-261312

### DISCLOSURE OF INVENTION

### PROBLEMS TO BE SOLVED BY THE INVENTION

The present invention has been made in view of the above prior art, and an object of the present invention is to provide a method for producing a catalyst in which fine metal particles are supported to a support of a catalyst in a highly dispersed state by inhibiting aggregation of the fine metal particles on the support of a catalyst.

### MEANS TO SOLVE THE PROBLEMS

The present invention relates to a method for producing a catalyst, characterized in that the method comprises the step of supporting a metal atom on a support in which a thiol group is introduced on a surface thereof.

### EFFECTS OF THE INVENTION

According to the method of the present invention, a catalyst in which fine metal particles are supported to a support of a catalyst in a highly dispersed state by inhibiting aggregation of the fine metal particles on the support of a catalyst can be provided.

### BRIEF DESCRIPTION OF THE DRAWINGS

[Figure 1] A TEM photograph of a catalyst obtained in Example 1 of the present invention.
[Figure 2] A TEM photograph of a catalyst obtained in Example 2 of the present invention.
[Figure 3] A TEM photograph of a catalyst obtained in Example 3 of the present invention.
[Figure 4] A TEM photograph of a catalyst obtained in Example 4 of the present invention.
[Figure 5] A TEM photograph of a catalyst obtained in Comparative Example 1 showing the prior art.
[Figure 6] A graph showing the evaluation results of the oxidation-reduction reactivity in Experimental Example 1.

### BEST MODE FOR CARRYING OUT THE INVENTION

Conventionally, when a catalyst is supported to a support by a liquid reducing method, in a case, for example, where a support such as a carbon support is used, the aggregation of the catalyst cannot be sufficiently inhibited at the time where the catalyst is supported on the support by reducing the catalyst precursor. Therefore, a catalyst could not be supported on a support in a highly dispersed state.

However, according to the method of the present invention, since a thiolated support is used, the thiol group is strongly adsorbed on the surface of fine metal particles when a catalyst is supported through the reduction of a catalyst precursor, so that the aggregation of the fine metal particles are effectively inhibited, whereby a catalyst in which the fine metal particles are dispersed in a highly dispersed state on the surface is obtained.

According to the method of the present invention, the reason why a catalyst in which the fine metal particles are present in a highly dispersed state on the surface is obtained as described above is considered to be presumably based on the fact that the thiol group has a property of being easily adsorbed to a metal, especially a precious metal.

The support used in the present invention includes, for example, carbon supports, oxide supports, and the like. Any of these supports can be suitably used in the present invention. Among them, the carbon supports are more preferable.

The carbon support may be those that are generally used in catalysts, and is not particularly limited. Specific examples of the carbon support include multiwalled carbon nanotube (MWNT), single-walled carbon nanotube (SWNT), carbon nanofibers (CNF), carbon black (CB), activated charcoal (AC), activated carbon nanofibers (ACF), and the like, and the present invention is not limited to those exemplified above.

In addition, the oxide support may also be those that are generally used for a catalyst, and is not particularly limited. Specific examples of the oxide support include inorganic oxides such as silica, alumina, and zeolites, and the present invention is not limited to those exemplified above.

The size and the shape of the support are not particularly limited, and it is preferable that the size and the shape are properly selected according to the application of the catalyst, and the like.

A thiol group can be introduced on a surface of the support as described, for example, hereinbelow.
First, a support is subjected to an oxidation treatment. The oxidation treatment is a pre-treatment for halogenating the surface of the support in the next step.

The oxidation treatment of the support can be carried out by, for example, subjecting a support to an acid treatment, or heating a support in an atmosphere in which oxygen is present, such as the air, thereby oxidizing the surface thereof.

When the support is subjected to an acid treatment, for example, an inorganic acid such as sulfuric acid, nitric acid, or hydrochloric acid, an organic acid such as benzenesulfonic acid, an oxidizing agent such as potassium permanganate, hydrogen peroxide, potassium chromate, lead dioxide, or copper oxide can be used. These agents may be used alone or in combination of two or more kinds. Among them, the inorganic acid such as sulfuric acid, nitric acid, or hydrochloric acid, and potassium permanganate are preferable.

Usually, the temperature at which the support is subjected to an acid treatment is preferably from 300° to 700°C, and more preferably from 400° to 500°C, taking enhancement of the efficiency of the acid treatment and safety into consideration.

In addition, the time period required for the acid treatment cannot be unconditionally determined because the time period differs depending upon the kinds of the support, the treatment temperature of the acid treatment, and the like. The time period is usually within 2 hours.

On the other hand, when the surface of the support is oxidized, the support may be heated in an atmosphere in which oxygen is present such as the air. The heating temperature of the support cannot be unconditionally determined because the heating temperature differs depending upon the materials of the support, and the like. For example, when the support is a carbon support, usually the heating temperature is preferably from 300° to 700°C or so, and more preferably from 400° to 500°C or so. As described above, the support is heated at a given temperature in the air for a given time period (usually within 12 hours), whereby a carboxyl group can be introduced on the surface of the support.

After the support is subjected to an oxidization treatment, the surface of the support is halogenated. A halogenating agent can be used in the halogenation of the surface of the support.

The halogenating agent includes, for example, thionyl chloride, aluminum chloride, mercury chloride, and the like, and the present invention is not limited to those exemplified above.

The halogenation of the surface of the support can be carried out by, for example, using a halogenating agent, and stirring a support and the halogenating agent at a proper temperature for a proper time period. The temperature upon the halogenation may usually be from 50° to 100°C or so. In addition, the time period required for the halogenation is not particularly limited, and may be usually within 12 hours.

Next, the surface of the halogenated support is thiolated, thereby introducing a thiol group thereinto.

The method for thiolating the surface of the halogenated support is not particularly limited. The method is an organo-chemical method, a mechano-chemical method, or the like.

Representative examples of the organo-chemical method include a method including the step of reacting a halogenated support and a thiolating agent, and the like.

Representative examples of the thiolating agent include aminoalkanethiols having 1 to 12 carbon atoms, such as aminomethanethiol, aminoethanethiol, and aminododecanethiol; mercapto alcohols having 1 to 12 carbon atoms such as mercapto methanol; mercapto ethanol, and mercapto dodecanol; benzene derivatives such as aminothiophenol and mercapto phenol; and the like, and the present invention is not limited to those exemplified above.

The reaction of the halogenated support and the thiolating agent can be carried out by, for example, contacting the halogenated support with the thiolating agent. During the reaction, it is preferable that the reaction temperature is from 50° to 100°C or so, from the viewpoint of reaction efficiency. In addition, the reaction time period cannot be unconditionally determined because the reaction time period differs depending upon reaction conditions such as the reaction temperature, and the like. The reaction time period is usually within 24 hours.

Thus, the support in which a thiol group is introduced on the surface can be obtained. Next, fine metal particles are supported on the support obtained.

The metal used in the fine metal particles may be a metal that has a catalytic activity, and the present invention is not limited by its kind. Representative examples of the metal include precious metals such as gold and platinum; metals having electrocatalytic activity such as iron, cobalt, nickel, chromium, molybdenum, and ruthenium; and the like. Each of these metals may be used alone, or in the form of an alloy.

The method for supporting fine metal particles on the support includes, for example, a method of reducing a metal precursor according to a liquid reducing method, thereby supporting the fine metal particles on the support, and the like. As one example, for example, in a case where platinum is used as a metal, chloroplatinic acid is used as a platinum precursor, sonicated, and stirred, and the like, thereby sufficiently contacting a support in which a thiol group is introduced on the surface, with chloroplatinic acid, and thereafter the reaction mixture is reduced with a reducing agent, whereby platinum can be supported to the support.

The reducing agent includes, for example, sodium borohydride, aluminum lithium hydride, hydrogen, and the like, and the present invention is not limited to those exemplified above. It is preferable that the amount of the reducing agent is usually adjusted to an excess amount to the metal precursor, for example, an amount of 1.5 to 10 mol per 1 mol of the metal precursor.

Thus, the catalyst in which a metal atom is supported on the support in which a thiol group is introduced on the surface is obtained. On this catalytic surface, fine metal particles are supported in a highly dispersed state in a manner that the fine metal particles are not aggregated.

The particle size of the fine metal particles supported on the catalyst surface is not particularly limited, and it is preferable that the particle size is usually from 1 to 3 nm or so. In addition, the amount of adhesion of the fine metal particles on the catalyst differ depending upon the number of thiol groups existing on the support surface, and the like. It is preferable that the amount of adhesion of the fine metal particles is usually from 10 to 60% (mass ratio) or so of the support, from the viewpoint of catalytic activity, and the like. The amount of the adhesion of the fine metal particles on the catalyst can be easily controlled by, for example, adjusting the number of the thiol groups introduced on the support surface, or adjusting the amount of adhesion of the fine metal particles.

The particle size of the fine metal particles can be controlled depending upon the desired properties required for the catalyst. The particle size of the fine metal particles can be controlled by subjecting the fine metal particles-supported catalyst to a heat treatment. For example, when the fine metal particles-supported catalyst is subjected to a heat treatment, a thiol group on the surface of a support (for example, carbon nanotube, or the like) is removed, but at the same time the neighboring fine metal particles themselves are integrated, so that the size of the fine metal particles can be highly controlled to an even size. The heat treatment of the fine metal particles-supported catalyst can be carried out by heating the catalyst at a temperature of, for example, from 150° to 350°C, preferably from 200° to 300°C, and more preferably 250°C or so, for a period of within 2 hours, preferably from 5 to 40 minutes, more preferably from 10 to 30 minutes, and even more preferably from 15 to 25 minutes, in a hydrogen atmosphere. As described above, the particle size of the fine metal particles supported on the catalyst can be controlled by adjusting a heating temperature and a heating time period when the fine metal particles-supported catalyst is subjected to a heat treatment.

As explained above, according to the method of the present invention, a thiolated support is used, and the thiol group is strongly adsorbed on fine metal particles, so that the aggregation of the fine metal particles on the support of the catalyst is inhibited, whereby a catalyst in which the fine metal particles are supported in a highly dispersed state on the support of the catalyst can be produced.

In the catalyst obtained by the method of the present invention, since the fine metal particles are present on the surface in a highly dispersed state, the catalyst can be suitably used for, for example, a catalytic electrode for fuel cells, a composite electrode for capacitors and secondary batteries, or the like.

### EXAMPLES

Next, the present invention will be more specifically described hereinbelow on the basis of Examples, without intending to limit the scope of the present invention thereto.

### Example 1

One-hundred milligrams of multiwalled carbon nanotubes were subjected to an oxidation treatment with 6 M nitric acid at 70°C for 1 hour. Thereafter, 25 mL of thionyl chloride was added to this multiwalled carbon nanotubes, and the mixture was stirred at 70°C for 12 hours, thereby chlorinating the surface of the multiwalled carbon nanotubes.

Next, the chlorinated multiwalled carbon nanotubes and aminoethanethiol were allowed to react at 70°C for 24 hours, thereby thiolating the surface of the multiwalled carbon nanotubes, to give a carbon support on the surface of which a thiol group was introduced.

The amount 6.4 mL of a 10 mM aqueous chloroplatinic acid solution was supplied to 50 mg of the carbon support obtained, and the mixture was subjected to ultrasonic dispersion for 1 hour, and thereafter chloroplatinic acid was reduced with an excess amount of a 100 mM aqueous sodium borohydride solution, thereby giving a catalyst in which platinum was supported on the above-mentioned carbon support.

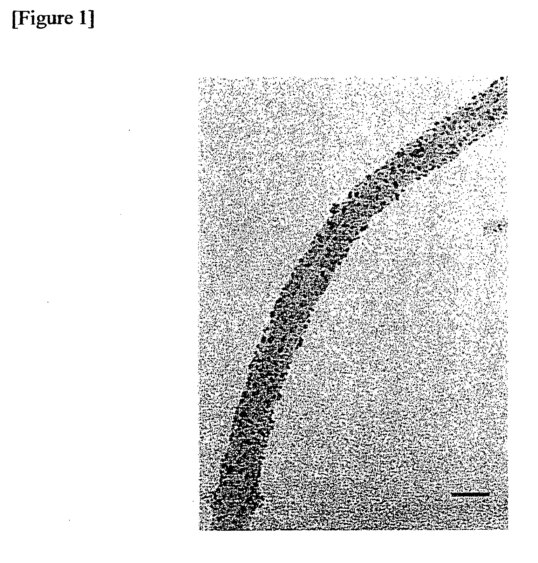

A transmission electron microscope (hereinafter referred to as "TEM") photograph of the resulting catalyst is shown in Figure 1. Here, the scale is indicated by a horizontal line segment at the bottom right of Figure 1, wherein the length of the straight line segment is equivalent to 25 nm.

As is clear from the photograph shown in Figure 1, it can be seen that the platinum particles are supported on the surface of the resulting catalyst in a highly dispersed state.

### Example 2

One-hundred milligrams of multiwalled carbon nanotubes were subjected to a heat treatment in the air at 500°C for 2 hours. Thereafter, 25 mL of thionyl chloride was added to this multiwalled carbon nanotubes, and the mixture was stirred at 70°C for 12 hours, thereby chlorinating the surface of the multiwalled carbon nanotubes.

Next, the chlorinated multiwalled carbon nanotubes and aminoethanethiol were allowed to react at 70°C for 24 hours, thereby thiolating the surface of the multiwalled carbon nanotubes, to give a carbon support on the surface of which a thiol group was introduced.

The amount 3.2 mL of a 10 mM aqueous chloroplatinic acid solution and 6.2 mL of a 10 mM aqueous ruthenium chloride solution were supplied to 50 mg of the carbon support obtained, and the mixture was subjected to ultrasonic dispersion for 1 hour, and thereafter chloroplatinic acid and ruthenium chloride were reduced with an excess amount of a 100 mM aqueous sodium borohydride solution, thereby giving a catalyst in which an alloy made of platinum and ruthenium was supported on the above-mentioned carbon support.

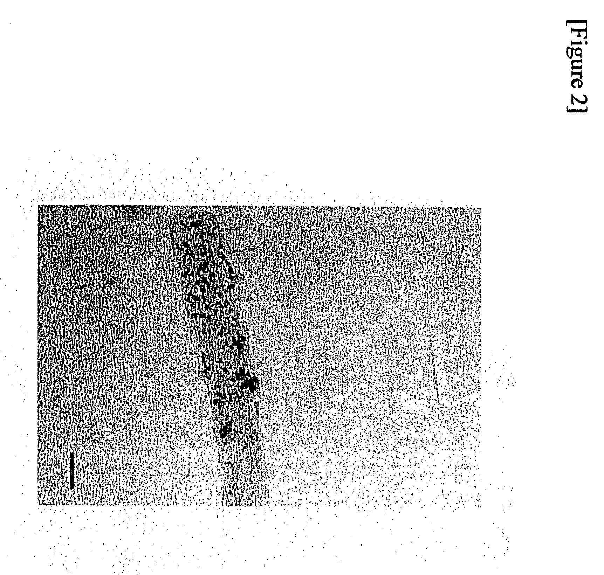

A TEM photograph of the resulting catalyst is shown in Figure 2. Here, the scale is indicated by a horizontal line segment at the bottom right of Figure 2, wherein the length of the straight line segment is equivalent to 25 nm.

As is clear from the photograph shown in Figure 2, it can be seen that the alloy particles composed of platinum and ruthenium are supported on the surface of the resulting catalyst in a highly dispersed state.

### Example 3

One-hundred milligrams of multiwalled carbon nanotubes were subjected to an oxidation treatment with a mixed acid of 120 mL of a 97% concentrated sulfuric acid and 40 mL of a 70% concentrated nitric acid at an ambient temperature for 1 hour. Thereafter, 25 mL of thionyl chloride was added to this multiwalled carbon nanotubes, and the mixture was stirred at 70°C for 12 hours, thereby chlorinating the surface of the multiwalled carbon nanotubes.

Next, the chlorinated multiwalled carbon nanotubes and aminothiophenol were allowed to react at 70°C for 36 hours, thereby thiolating the surface of the multiwalled carbon nanotubes, to give a carbon support on the surface of which a thiol group was introduced.

The amount 3.2 mL of a 10 mM aqueous chloroplatinic acid solution was supplied to 25 mg of the carbon support obtained, and the mixture was subjected to ultrasonic dispersion for 1 hour, and thereafter chloroplatinic acid was reduced with an excess amount of a 100 mM aqueous sodium borohydride solution, thereby giving a catalyst in which platinum was supported on the above-mentioned carbon support.

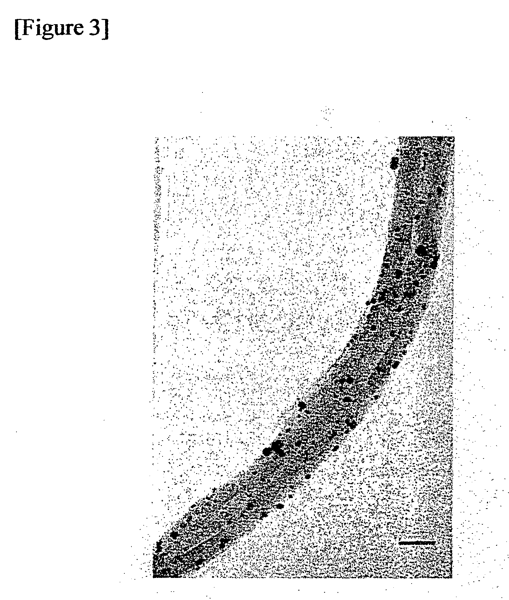

A TEM photograph of the resulting catalyst is shown in Figure 3. Here, the scale is indicated by a horizontal line segment at the bottom right of Figure 3, wherein the length of the straight line segment is equivalent to 25 nm.

As is clear from the photograph shown in Figure 3, it can be seen that the platinum particles are supported on the surface of the resulting catalyst in a highly dispersed state.

### Example 4

One-hundred milligrams of a carbon black [manufactured by Carbot Corporation, USA, trade name: Vulcan XC-72R] was mixed with 50 mL of 1 M aqueous potassium permanganate solution, and the mixture was stirred at 70°C for 1 hour, thereby carrying out an oxidation treatment. Thereafter, 25 mL of thionyl chloride was added to the mixture, and the mixture was stirred at 70°C for 12 hours, thereby chlorinating the surface of the carbon black.

Next, the chlorinated carbon black and aminoethanethiol were allowed to react at 70°C for 24 hours, thereby thiolating the surface of the carbon black, to give a carbon support on the surface of which a thiol group was introduced.

The amount 12.8 mL of a 10 mM aqueous chloroplatinic acid solution was supplied to 100 mg of the carbon support obtained, and the mixture was subjected to ultrasonic dispersion for 1 hour, and thereafter chloroplatinic acid was reduced with an excess amount of a 100 mM aqueous sodium borohydride solution, thereby giving a catalyst in which platinum was supported on the above-mentioned carbon support.

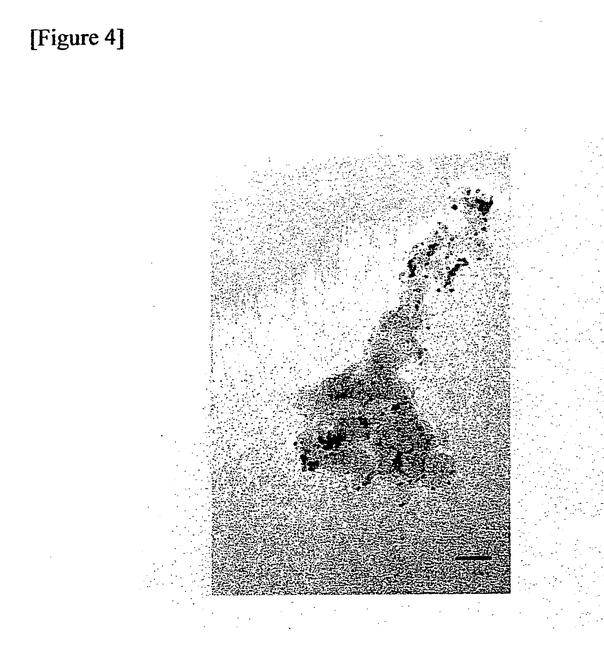

A TEM photograph of the resulting catalyst is shown in Figure 4. Here, the scale is indicated by a horizontal line segment at the bottom right of Figure 4, wherein the length of the straight line segment is equivalent to 25 nm.

As is clear from the photograph shown in Figure 4, it can be seen that the platinum particles are supported on the surface of the resulting catalyst in a highly dispersed state.

### Example 5

The catalyst obtained in Example 1 was subjected to a heat treatment with changing a heat treatment temperature in the hydrogen atmosphere. First, the catalyst was subjected to a heat treatment at a temperature of 250°C. Consequently, the thiol group existing in the catalyst was removed. As a result, the integration of the fine metal particles themselves has begun while removing the thiol group on the support surface. After 10 minutes passed, fine metal particles having a particle size of about 1 nm were present on the catalyst surface. Next, the catalyst was subjected to a heat treatment in the same manner as above except that a heat treatment temperature was changed to 400°C. Consequently, after 10 minutes passed, fine metal particles having a particle size of about 2 nm existed on the catalyst surface. In addition, the catalyst was subjected to a heat treatment in the same manner as above except that a heat treatment temperature was changed to 500°C. Consequently, after 10 minutes passed, fine metal particles having a particle size of about 3 nm existed on the catalyst surface.

It can be seen from the above that according to Example 5, the fine metal particles are grown to have a particle size of a minimum of 1 nm to a given size by subjecting the catalyst to a heat treatment while adjusting the heating time period at a given heating temperature, whereby the fine metal particles are controlled to a uniform size.

### Comparative Example 1

Twenty-milligrams of a 10 mM aqueous chloroplatinic acid solution was supplied to 100 mg of multiwalled carbon nanotubes, and the mixture was subjected to ultrasonic dispersion for 1 hour, and thereafter chloroplatinic acid was reduced with an excess amount of a 100 mM aqueous sodium borohydride solution, thereby giving a catalyst in which platinum was supported on the multiwalled carbon nanotubes.

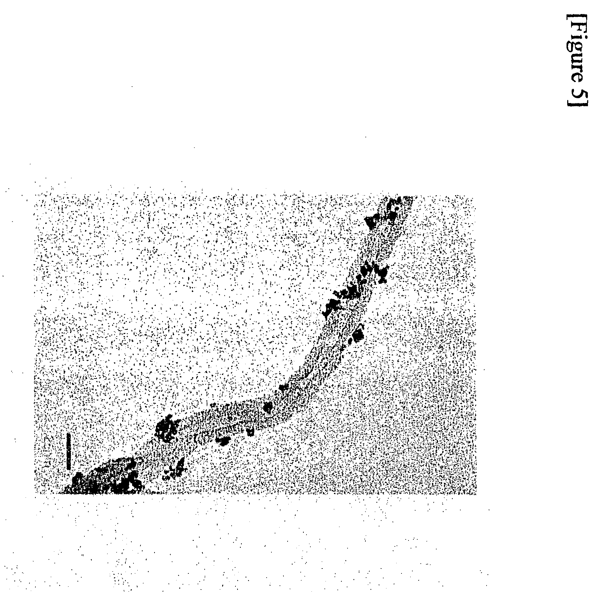

A TEM photograph of the resulting catalyst is shown in Figure 5. Here, the scale is indicated by a horizontal line segment at the bottom right of Figure 5, wherein the length of the straight line segment is equivalent to 25 nm.

As is clear from the photograph shown in Figure 5, it can be seen that the platinum particles are not homogeneously dispersed on the surface of the resulting catalyst, thereby being locally aggregated.

In addition, it can be seen from the comparative results of each of the examples and Comparative Example 1 that according to each of the examples, the aggregation of the fine metal particles on the support of the catalyst is inhibited incomparably with a conventional method (Comparative Example 1), whereby a catalyst in which the fine metal particles are adsorbed on the support of the catalyst in a highly dispersed state can be produced.

### Experimental Example 1

The oxidation-reduction reactivity was evaluated using the catalyst (particle size of fine metal particles: about 1 nm) obtained by subjecting the catalyst to a heat treatment at a heat treatment temperature of 250°C in Example 5.
First, 2 mg of the catalyst obtained in Example 5 and 0.02 mL of NaPiOn were dispersed in 10 mL of distilled water, and 0.01 mL of the slurry obtained was applied on both sides of an electrode for a rotary disk electrode (RDE) (diameter: 3 mm, made of glassy carbon), and the coated electrode was dried, to produce an electrode.

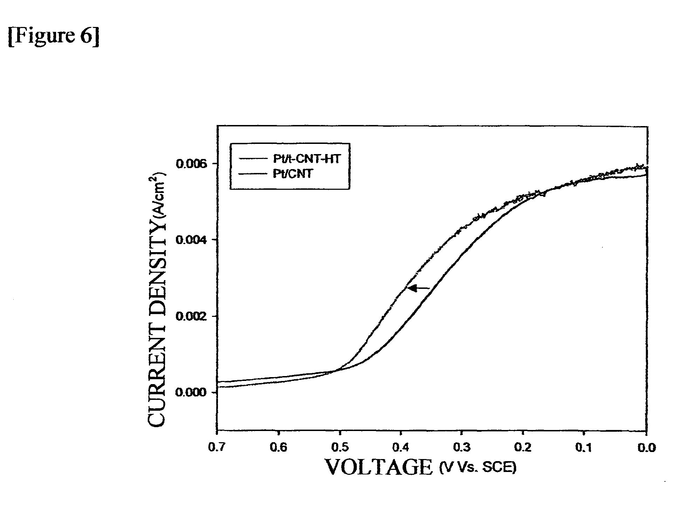

The oxidation-reduction reactivity was evaluated by using cyclic voltammetry in an oxygen-saturated aqueous 0.1 M perchloric acid solution using the electrode obtained. The results are shown in Figure 6.

It can be seen from the results shown in Figure 6 that the catalyst obtained in Example 5 has a peak of the oxidation-reduction reaction shifted in the direction of an arrow, as compared to an ordinary platinum catalyst supported on the nanotubes, so that the reducing reaction will take place with shifting more to the oxidation side of the voltage. Therefore, it can be seen that since the catalyst produced by this method has fine metal particles of which size is very uniformly controlled, the catalyst has a stabilized high-catalytic activity.

### INDUSTRIAL APPLICABILITY

The catalyst obtained by the method of the present invention can be suitably used, for example, for a catalytic electrode of fuel cells, a composite electrode of capacitors or secondary batteries, a catalyst for an organic synthesis, a catalyst for an environmental cleanup, or the like.

## Claims

1. A method for producing a catalyst, comprising the step of supporting a metal atom on a support in which a thiol group is introduced on its surface.

2. The method for producing a catalyst according to claim 1, wherein the support is a carbon support or an oxide support.

3. The method for producing a catalyst according to claim 1 or 2, further comprising the step of removing a thiol group that is present on the support.

4. A catalyst obtained by the method as defined in any one of claims 1 to 3.
